# EUROPÄISCHE PATENTSCHRIFT

(11) **EP 2 722 662 B1**
(45) Veröffentlichungstag und Bekanntmachung des Hinweises auf die Patenterteilung: **02.08.2017**
(21) Anmeldenummer: 12189200.4
(22) Anmeldetag: 19.10.2012
(51) Int. Cl.: G01N 17/00, G01N 3/56

(54) **Verfahren und Vorrichtung zur Korrosionsprüfung mindestens einer Probe - Tropfinator**
Method and device for corrosion inspection of at least one sample dropinator
Procédé et dispositif de vérification de la corrosion avec au moins une sonde de goutte-à-goutte

(43) Veröffentlichungstag der Anmeldung: 23.04.2014
(73) Patentinhaber: Voestalpine Stahl GmbH, 4020 Linz (AT)
(72) Erfinder: Haslehner, Gerald, 4052 Ansfelden (AT); Fleischanderl, Martin, 4261 Rainbach i.M. (AT)

(56) Entgegenhaltungen:
- WO-A1-2011/153558
- CN-A- 1 699 962
- DE-A1- 2 013 693
- AYKUT ERKAL ET AL: "Assessment of wind-driven rain impact, related surface erosion and surface strength reduction of historic building materials", BUILDING AND ENVIRONMENT, PERGAMON PRESS, OXFORD, GB, Bd. 57, 14. Mai 2012 (2012-05-14), Seiten 336-348, XP028431594, ISSN: 0360-1323, DOI: 10.1016/J.BUILDENV.2012.05.004 [gefunden am 2012-05-23]
- TOBIN E F ET AL: "Comparison of liquid impingement results from whirling arm and water-jet rain erosion test facilities", WEAR, ELSEVIER SEQUOIA, LAUSANNE, CH, Bd. 271, Nr. 9, 2. Februar 2011 (2011-02-02), Seiten 2625-2631, XP028246058, ISSN: 0043-1648, DOI: 10.1016/J.WEAR.2011.02.023 [gefunden am 2011-04-21]

## Beschreibung

Die Erfindung betrifft eine Vorrichtung zur Korrosionsprüfung mindestens einer Probe mit Hilfe einer Prüfflüssigkeit mit einer Halterung zur Befestigung wenigstens einer zu prüfenden Probe, mit einem Vorratsbehälter für die Prüfflüssigkeit, mit einer mit dem Vorratsbehälter verbundenen Flüssigkeitsleitung und mit einer an die Flüssigkeitsleitung anschließenden Tropfeinrichtung zur Abgabe von Tropfen auf die Probe.

Prüfflüssigkeit auf eine Probe in Tropfenform zu leiten und die Probe damit einer Korrosionsprüfung zu unterwerfen, ist aus dem Stand der Technik bekannt (DE2013693A, DE102007060511A1). Zu diesem Zweck wird einer Tropfeinrichtung aus einem Vorratsbehälter über eine Flüssigkeitsleitung Prüfflüssigkeit zugeführt, die in weiterer Folge auf die Probe gerichtet Tropfen über eine Injektionsnadel abgibt. Für den Fall, dass mehrere unterschiedliche Proben durch Tropfenkorrosion zu prüfen bzw. die damit erfassten Ergebnisse gegenüberzustellen sind, kann sich, insbesondere bei vergleichsweise langen Prüfzeiten, ein hoher Aufwand ergeben. Zudem müssten derartige Vorrichtungen eine reproduzierbare Korrosionsprüfung sicherstellen, um von Proben untereinander vergleichbare Ergebnisse erhalten zu können. Veränderungen der Prüfbedingungen, die beispielsweise durch ein teilweises Verdampfen der Prüfflüssigkeit, etwa aufgrund von Temperaturänderungen, oder durch einen Materialeintrag der Proben verursacht werden können, führen bei einer seriellen Korrosionsprüfung vielfach zu verfälschten Ergebnissen. Eine parallele Tropfenbelastung als Alternative zur seriellen Korrosionsprüfung bedarf jedoch eines vergleichsweise hohen Konstruktionsaufwands an der Vorrichtung, insbesondere hinsichtlich eines Abgleichs der parallelen Tropfeinrichtungen, um idente Prüfbedingungen an den Proben zu gewährleisten. Vorrichtungen, die vergleichsbare Messergebnisse zu den parallel geprüften Proben gewährleisten können, sind daher meist kostenintensiv und auch wartungsaufwändig.

Aus dem Stand der Technik ist des Weiteren bekannt zur Ermittlung der Korrosionsbeständigkeit Proben nacheinander zu betropfen und diese Ergebnisse mittels eines Stain-aspect ration vergleichbar zu machen (Aykut Erkal et al. "Assessment of wind-driven rain impact, related surface erosion and surface strength reduction of historic building materials", Building and environment, Pergamon Press, Oxford, GB, Bd. 57, 14. Mai 2012, seiten 336-348, XP028431594, ISSN: 0360-1323, DOI: 10.1016/J.BUILDENV.2012.05.004).

Weiterer Stand der Technik zur Korrosionsprüfung sind beispielsweise die DE2013693, CN1699962 oder auch das Paper von Tobin et al. "Comparison of liquid impingement results from whirling arm and water-jet rain erosion test facilities", Wear, Elsevier Sequoia, Lausanne, CH, Bd. 271, Nr. 9, 2. Februar 2011, Seiten 2625-2631, XP028246058, ISSN: 0043-1648, DOI: 10.1016/J.WEAR.2011.02.023.

Von der Anmelderin selbst wurde ein alternatives Korrosionsprüfverenfahr bzw. dessen Vorrichtung zum Patent angemeldet, siehe WO2011/153558. Es handelt sich dabei um ein adaptiertes Korrosionsprüfgerät, welches die in-situ Beobachtung des Korrosionsfortschritts auf Stahlblechproben ermöglicht. Mit einem Ultraschallvernebler wird sehr rasch ein feiner Nebel erzeugt und mit einem Ventilator in Schwebe gehalten.

Es ist daher die Aufgabe der Erfindung, eine Vorrichtung zur Korrosionsprüfung der eingangs geschilderten Art derart zu verändern, dass trotz konstruktiver Einfachheit der Vorrichtung Proben reproduzierbar und schnell auf Tropfenkorrosion getestet werden können. Außerdem soll die Vorrichtung einen geringen Wartungsaufwand gewährleisten können.

Die Erfindung löst die gestellte Aufgabe hinsichtlich der Vorrichtung dadurch, dass mindestens zwei Flüssigkeitsleitungen an den gemeinsamen Vorratsbehälter getrennt voneinander angeschlossen sind und unterhalb des Pegels der Prüfflüssigkeit im Vorratsbehälter an einem gemeinsamen horizontalen Träger befestigt je einen Anschluss für eine Tropfeinrichtung zur Korrosionsprüfung von mindestens zwei an der Halterung befestigten Proben aufweisen. des Trägers eine vergleichsweise hohe konstruktive Einfachheit erreicht werden kann, was nicht nur für eine standfeste, sondern auch eine kostengünstige Vorrichtung sorgen kann. Eine verbesserte Standardisierung der Bedingungen von Korrosionsprüfungen kann mithilfe der erfindungsgemäßen Vorrichtung somit erhalten werden.

Im Allgemeinen wird darauf hingewiesen, dass als Prüfflüssigkeit zumeist Wasser verwendet wird. Dem Wasser können aber auch weitere Elemente beigefügt sein um den Säuregehalt von beispielsweise saurem Regen simulieren zu können. Zur beschleunigten Korrosionsprüfung ist es auch denkbar, Salz beizumengen. Mögliche Medien für die Prüfflüssigkeit sind beispielsweise: Regenwasser, destilliertes Wasser (= vollentsalztes Wasser) mit eventuellen Zusätze von Schwefelsäure und/oder Staubpartikel.

Für eine weitere Vergleichmäßigung der Druckverhältnisse an den Tropfeinrichtungen kann gesorgt werden, wenn die Flüssigkeitsleitungen in gleichen Längen vom Träger abstehend in je einen Anschluss für eine Tropfeinrichtung enden.

Die Konstruktionsverhältnisse an der Vorrichtung sind zusätzlich zu vereinfachen, wenn die Tropfeinrichtungen je eine Injektionsnadel aufweisen, die an den jeweiligen Anschluss der Flüssigkeitsleitungen anschließt. Zudem kann damit auch eine gleiche Tropfenbelastung an den Proben ermöglicht werden, weil diese passive Tropfenabgabe der Injektionsnadeln im Wesentlichen durch hydrostatische Druckverhältnisse bestimmt ist, welche Druckverhältnisse erfindungsgemäß bei den Injektionsnadeln gleich anliegen. Dieser Vorteil kann sich insbesondere dadurch auszeichnen, dass die vergleichsweise kostengünstigen Injektionsnadeln auch einfach auszutauschen sind und an unterschiedliche Bedingungen - etwa hinsichtlich verschiedener Viskositäten der Prüfflüssigkeit abgestimmt werden können. Die erfindungsgemäße Vorrichtung kann daher äußerst reproduzierbar parallel verlaufende Korrosionsbelastungen mehrerer Proben ermöglichen. Es können aber auch beispielsweise zum Test der unterschiedlichen Abrasiv- und Korrosionswirkung von unterschiedlicher Tropfengröße bzw. Tropfengeschwindigkeit bei gleichen Probenarten unterschiedliche Injektionsnadelgrößen an der Tropfeinrichtung vorgesehen sein. Derartige Injektionsnadeln bzw. Kanülen können einen Durchmesser von 0,2 mm oder bei einer Prüfflüssigkeit mit Zusatzpartikel auch einen Durchmesser von 0,5 mm aufweisen.

Weist die Vorrichtung ein Gehäuse und eine mit dem Gehäuse verbundene Linearführung auf, die zwischen Träger und Gehäuse vorgesehen ist, kann die Handhabung der Vorrichtung weiter vereinfacht werden. Über diese Linearführung kann nämlich die Fallhöhe der Tropfen und damit die Impulsbelastung der Proben auf einfache Weise verändert werden. Dabei kann der horizontale Träger trotz seiner Höhenverstellung stets für einen gleichen hydrostatischen Druck in den Flüssigkeitsleitungen sorgen.

Weist die Halterung eine Haltefläche für alle Proben auf, kann sich das Bestücken der Vorrichtung mit Proben erleichtern, wodurch die Handhabung der Vorrichtung vereinfacht werden kann.

Vereinfachte Konstruktionsverhältnisse können geschaffen werden, wenn eine Platte der Halterung die Haltefläche ausbildet. So kann für alle Proben eine plane Auflage für ein genaues Ausrichten der Proben zur Verfügung gestellt werden - und zwar hinsichtlich der Proben zueinander, vor allem aber auch hinsichtlich der Beabstandungen der Proben zu den Tropfeinrichtungen.

Die Handhabungsverhältnisse beim Bestücken von magnetisierbaren Proben können vereinfacht werden, wenn die Halterung zumindest bereichsweise im Bereich seiner Haltefläche permanentmagnetisch zur Fixierung der metallischen Proben ausgebildet ist. Beispielsweise ist vorstellbar, an unterschiedlichen Stellen der Haltefläche Permanentmagneten vorzusehen, um damit die Proben an der Halterung zu positionieren und zu halten. Dies kann beispielsweise durch eine Befestigung von Permanentmagneten an der Rückseite der nicht leitenden Platte, welche insbesondere aus Kunststoff oder GFK gefertigt sein kann, ermöglicht werden. Vorzugsweise können nichtmagnetische Proben durch ein doppelseitiges Klebeband oder einen Klettverschluss auf der Haltefläche positioniert werden.

Eine weitere Verbesserung der Ausrichtung der Proben gegenüber der Tropfeinrichtung kann verhältnismäßig einfach erreicht werden, wenn die Halterung eine Schwenkeinrichtung aufweist, die die Haltefläche schwenkbar gegenüber der Tropfeinrichtung lagert. Vorteilhafterweise können durch diese Schwenkeinrichtung unterschiedliche Aufprallwinkel der Tropfen simuliert werden. Dies kann für das Verständnis der Korrosionsmechanismen an den jeweiligen Proben eine entscheidende Hilfe darstellen.

Ist die Schwenkeinrichtung über eine insbesondere senkrecht verlaufende Linearführung am Gehäuse verschiebbar gelagert, kann eine exakte Abstimmung der Distanz zwischen Tropfeinrichtung und Proben erreicht werden. Somit kann die erfindungsgemäße Vorrichtung beispielsweise auf Eigenschaften der Prüfflüssigkeit Rücksicht nehmen, da beispielsweise im Falle ihrer niedrigen Viskosität eine hohe Aufprallgeschwindigkeit auf die Probe eher zu vermeiden ist.

Ist der Vorratsbehälter mit einer Prüfflüssigkeit führenden Zuleitung verbunden und weist der Vorratsbehälter einen Überlauf auf, kann auf konstruktiv einfache Weise ein konstanter Pegel an Prüfflüssigkeit im Vorratsbehälter sichergestellt werden. Der Überlauf kann nämlich sicherstellen, dass erhöht zugeführte Mengen an Prüfflüssigkeit aus dem Vorratsbehälter abgeführt werden und Pegelschwankungen damit reduziert werden. Eine konstruktiv einfache Regelung für konstante hydrostatische Druckverhältnisse an den Tropfeinrichtungen kann damit geschaffen werden - eine verbesserte Standardisierung ist durch die erfindungsgemäße Vorrichtung somit gegeben.

Übergelaufene Prüfflüssigkeit kann zur Korrosionsprüfung weiter verwendet werden, wenn die Vorrichtung einen Arbeitsbehälter aufweist, mit der der Überlauf und die Zuleitung verbunden sind.

Die von den Proben ablaufende Prüfflüssigkeit kann aufgefangen werden, wenn die Vorrichtung eine unterhalb der Proben vorgesehene Auffangwanne für die Prüfflüssigkeit aufweist.

Ist die Auffangwanne über eine Pumpleitung der Vorrichtung mit dem Vorratsbehälter verbunden, kann mit vergleichsweise geringen Mengen an Prüfflüssigkeit eine zeitintensive Korrosionsprüfung ermöglicht werden. Bereits verwendete Prüfflüssigkeit kann nämlich wieder in den Vorratsbehälter zurückgepumpt und einer erneuten Verwendung zugeführt werden. Dabei können sich erfindungsgemäß eventuelle Verunreinigungen oder chemische Veränderungen der Prüfflüssigkeit durch abgetragenes Material der korrodierten Proben oder durch bereits erfolgte Korrosionsreaktionen nicht nachteilig auf die Prüfung auswirken, da für alle Proben die gleiche Prüfflüssigkeit weiter verwendet wird. Zudem kann vorgesehen sein, dass ein Filter die zurückgepumpte Prüfflüssigkeit reinigt, um damit diese beispielsweise von grobkörnigen Partikeln zu säubern. Des Weiteren kann damit erfindungsgemäß sichergestellt werden, dass im Vorratsbehälter stets ein konstanter Pegel der Prüfflüssigkeit besteht, wodurch an den jeweiligen Tropfeinrichtungen für gleiche hydrostatische Druckverhältnisse gesorgt wird. Somit kann sich auf verfahrenstechnisch einfache Weise eine vergleichbare Tropfenbelastung für die jeweiligen Proben einstellen - eine verbesserte Standardisierung ist durch die erfindungsgemäße Vorrichtung somit gegeben.

Die Erfindung hat sich außerdem die Aufgabe gestellt, ein Verfahren zur Korrosionsprüfung der eingangs geschilderten Art derart zu verbessern, dass damit reproduzierbar effizient und schnell eine Korrosionsprüfung durchgeführt werden kann.

Die Erfindung löst die gestellte Aufgabe dadurch, dass mehrere Proben mit je einer Injektionsnadel parallel mit Prüfflüssigkeit betropft werden, wobei der hydrostatische Druck der Prüfflüssigkeit an den Injektionsnadeln gleich eingestellt wird.

Werden mehrere Proben mit je einer Injektionsnadel parallel mit Prüfflüssigkeit betropft, kann zunächst die Korrosionsprüfung beschleunigt werden und damit effizienter sein, weil mehrere Proben gleichzeitig auf Korrosion geprüft werden. Um jedoch auch vergleichbare Messergebnisse zu den parallel betropften Proben zu erhalten, wird erfindungsgemäß vorgeschlagen, dass der hydrostatische Druck der Prüfflüssigkeit an den Injektionsnadeln beispielsweise von grobkörnigen Partikeln zu säubern. Des Weiteren kann damit erfindungsgemäß sichergestellt werden, dass im Vorratsbehälter stets ein konstanter Pegel der Prüfflüssigkeit besteht, wodurch an den jeweiligen Tropfeinrichtungen für gleiche hydrostatische Druckverhältnisse gesorgt wird. Somit kann sich auf verfahrenstechnisch einfache Weise eine vergleichbare Tropfenbelastung für die jeweiligen Proben einstellen - eine verbesserte Standardisierung ist durch die erfindungsgemäße Vorrichtung somit gegeben.

Die Erfindung hat sich außerdem die Aufgabe gestellt, ein Verfahren zur Korrosionsprüfung der eingangs geschilderten Art derart zu verbessern, dass damit reproduzierbar effizient und schnell eine Korrosionsprüfung durchgeführt werden kann.

Die Erfindung löst die gestellte Aufgabe dadurch, dass mehrere Proben mit je einer Injektionsnadel parallel mit Prüfflüssigkeit betropft werden, wobei der hydrostatische Druck der Prüfflüssigkeit an den Injektionsnadeln gleich eingestellt wird.

Werden mehrere Proben mit je einer Injektionsnadel parallel mit Prüfflüssigkeit betropft, kann zunächst die Korrosionsprüfung beschleunigt werden und damit effizienter sein, weil mehrere Proben gleichzeitig auf Korrosion geprüft werden. Um jedoch auch vergleichbare Messergebnisse zu den parallel betropften Proben zu erhalten, wird erfindungsgemäß vorgeschlagen, dass über die Höhe des Pegels an Prüfflüssigkeit eines Vorratsbehälters mit dem die Injektionsnadeln verbunden sind der hydrostatische Druck der Prüfflüssigkeit an den Injektionsnadeln gleich eingestellt wird. Die Proben erfahren somit bei deren Korrosionsprüfung gleiche Prüfbedingungen, was zu einem äußerst reproduzierbaren Verfahren führen kann.

In den Figuren ist der Erfindungsgegenstand beispielsweise dargestellt. Es zeigen
- Fig. 1: eine teilweise aufgerissene Frontansicht auf die erfindungsgemäße Vorrichtung zur Korrosionsprüfung,
- Fig. 2: eine vergrößerte Schnittansicht nach II-II der Fig. 1 und
13, 14, 15, 19, 20 und 21 unterhalb des Pegels 22 der Prüfflüssigkeit 6 im Vorratsbehälter 18 an einen gemeinsamen horizontalen Träger 23 befestigt sind, ist beim Träger 23 bzw. bei den Anschlüssen 24 der Flüssigkeitsleitungen 12, 13, 14, 15, 19, 20 und 21 ein gleicher hydrostatischer Druck gegeben, der zur Erzeugung einer gleichmäßigen Tropfbelastung genützt wird, um die Proben 2, 3, 4 und 5 unter gleichen Bedingungen auf Korrosion zu prüfen.

Diese gleichmäßige hydrostatische Druckverteilung ist am Anschluss 24 gewährt, indem die Flüssigkeitsleitungen 12, 13, 14, 15, 19, 20 und 21 in gleichen Längen vom Träger 23 abstehend in je einen Anschluss 24 für eine Tropfeinrichtung 8, 9, 10 bzw. 11 enden.

Konstruktiv einfach werden die Tropfeinrichtungen 8, 9, 10 bzw. 11 durch je eine Injektionsnadel 25 bzw. 26 ausgebildet. Die Injektionsnadeln 25, 26 schließen an den Anschluss 24 der jeweiligen Flüssigkeitsleitungen 12, 13, 14 bzw. 15 an. Damit ist eine passive Tropfeinrichtung 8, 9, 10 bzw. 11 geschaffen, mit denen ohne elektrisch oder mechanisch aktive Elemente eine Korrosionsprüfung durchführbar ist. Eine besonders kostensparende Vorrichtung 1 ist so geschaffen.

Zum Unterschied zu den Injektionsnadeln 25 ist die Injektionsnadel 26 länger ausgeführt, um damit auch eine von den anderen Injektionsnadeln 25 unterschiedliche Tropfbelastung zu erzeugen. Dies kann zur gezielten Gewinnung von Vergleichsdaten genutzt werden. Außerdem kann sich damit eine weitere mögliche Anwendung ergeben, in dem damit das Passivierungs- bzw. Repassivierungsverhalten erforscht wird. Hierfür ist nämlich eine zeitzyklische Einstellung der Tropfbelastung notwendig, beispielsweise eine konstante Betropfung am ersten Prüfungstag gefolgt von keiner Belastung mit Prüfflüssigkeit am zweiten Prüfungstag.

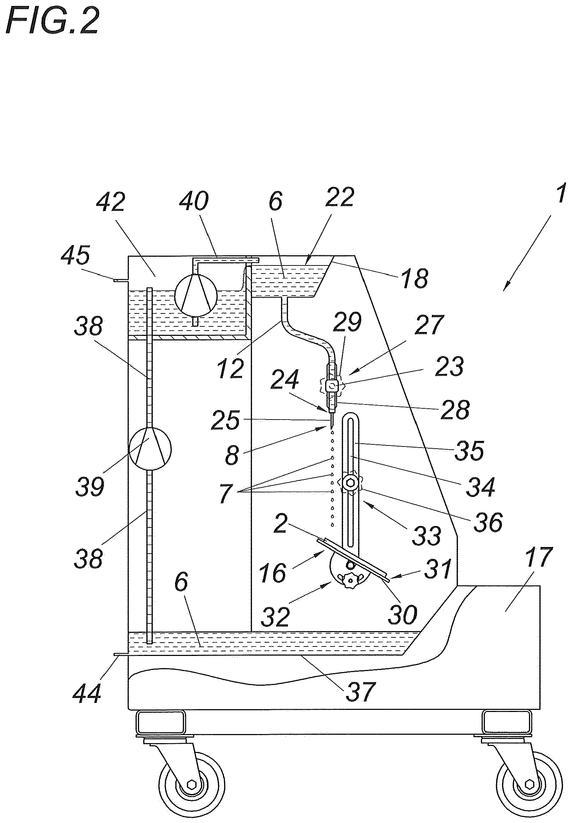

Wie der Fig. 2 insbesondere zu entnehmen, weist die Vorrichtung 1 eine mit dem Gehäuse 17 verbundene Linearführung 27 auf, die zwischen horizontalem Träger 23 und Gehäuse 17 vorgesehen ist und so eine vertikale Verstellung des Trägers 23 erlaubt. Zu diesem Zweck ist im Gehäuse ein Langloch 28 vorgesehen, in dem eine Schraubfixierung 29 geführt ist. Der mit der Schraubfixierung 29 verbundene Träger 23 wird über Klemmkräfte in seiner horizontalen Lage gehalten.

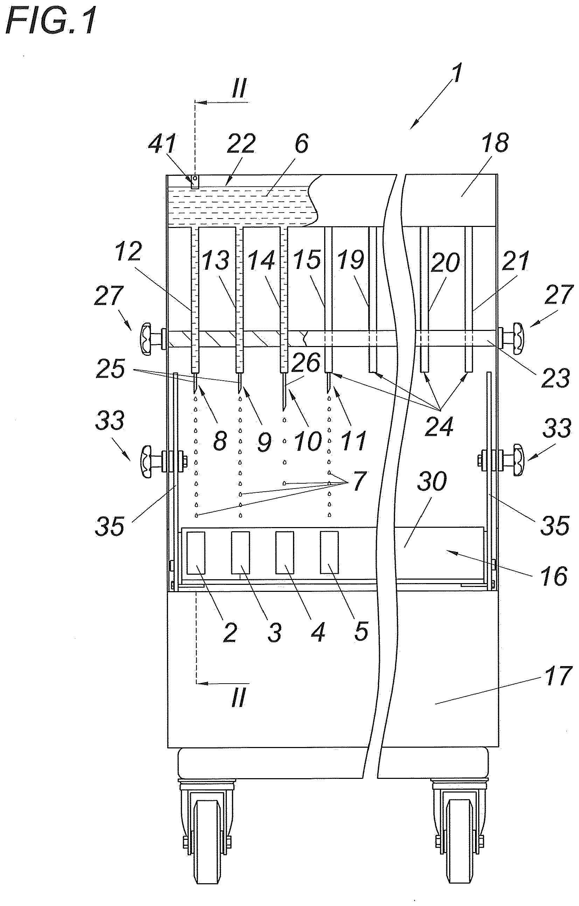

Wie den Figuren 1 und 2 entnommen werden kann, sind alle Proben 2, 3, 4 und 5 auf einer Platte 30 der Halterung 16 vorgesehen, die eine plane Haltefläche 31 für die Proben 2, 3, 4 und 5 ausbildet. Die Proben 2, 3, 4 und 5 sind somit einfach in der Vorrichtung 1 vorzusehen und auch gegenüber den diesbezüglichen Tropfeinrichtungen 8, 9, 10 bzw. 11 handhabungsfreundlich auszurichten. Die Haltefläche 31 kann zu diesem Zweck mit einer einen erhöhten Reibwert aufweisenden Oberfläche bzw. Beschichtung versehen sein.

Die Proben 2, 3, 4 und 5 können gegenüber den Tropfeinrichtungen 8, 9, 10 bzw. 11 in eine Schräglage gebracht werden. Hierfür ist eine Schwenkeinrichtung 32 vorgesehen, die die Platte 30 schwenkbar gegenüber den Tropfeinrichtungen 8, 9, 10 und 11 lagert. Die Halterung 16 kann auch in ihrer Höhe senkrecht verstellt werden, da die Schwenkeinrichtung 32 über eine senkrechte verlaufende Linearführung 33 am Gehäuse 17 verschiebbar gelagert ist. Auch hier dient ein Langloch 34 als Führungselement der Linearführung 33, wobei das Langloch 34 in einem Schieber 35 eingebracht ist, der über eine Schraubfixierung 36 mit dem Gehäuse 17 verklemmt werden kann. Der Schieber 35 ist fest mit der Platte 30 verbunden.

Es braucht nicht weiter erwähnt werden, dass die Linearführungen 27 und 33 gegenüberliegende Führungsteile aufweisen, wie dies der Fig. 1 zu entnehmen ist, um damit die Verstellbarkeit zu ermöglichen.

Die erfindungsgemäße Vorrichtung 1 kommt mit vergleichsweise geringen Mengen an Prüfflüssigkeit 6 - selbst für vergleichsweise zeitintensive Korrosionsprüfungen -aus. Die Befüllung des Arbeitsbehälter 42 bzw. des Vorratsbehälter 18 mit frischer Prüfflüssigkeit 6 erfolgt durch den Zulauf 45. Nach der Betropfung der Proben 2, 3, 4 und 5 ist eine Auffangwanne 37 vorgesehen, die Prüfflüssigkeit 6 auffängt. Über eine Pumpleitung 38 wird bei Bedarf Prüfflüssigkeit 6 in den Arbeitsbehälter 42 bzw. Vorratsbehälter 18 nachgepumpt. Zu diesem Zweck ist die Pumpleitung 38 mit einer Pumpe 39 versehen, die beispielsweise für einen konstanten Pegel 22 sorgt, um damit einen gleichbleibenden hydrostatischen Druck in den Flüssigkeitsleitungen 12, 13, 14, 15, 19, 20 und 21 und in weiterer Folge konstante Prüfbedingungen zu gewährleisten.

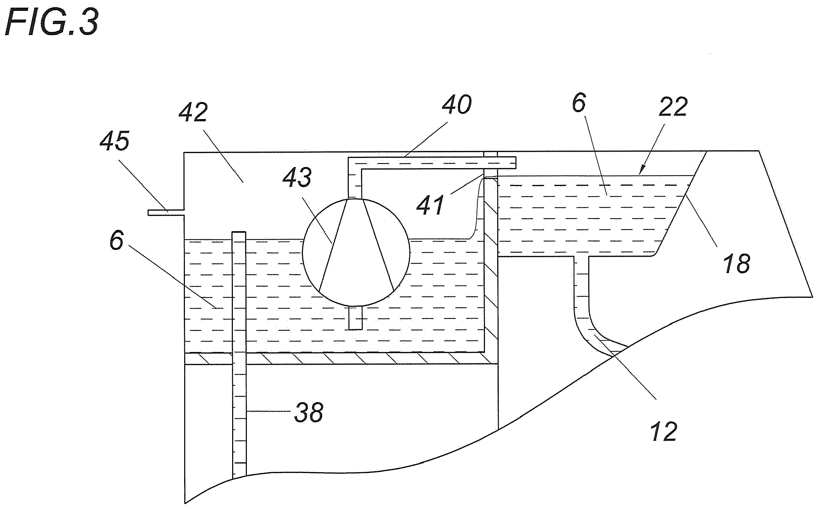

Nach Fig. 3 kann die Einrichtung zur Sicherstellung eines konstanten Pegels an Prüfflüssigkeit im Vorratsbehälter 18 näher erkannt werden. Der Vorratsbehälter 18 ist mit einer Prüfflüssigkeit 6 führenden Zuleitung 40 verbunden, die stetig Prüfflüssigkeit 6 zuführt, vorzugsweise mehr an Menge von Prüfflüssigkeit 6 als durch die Flüssigkeitsleitungen 12, 13, 14, 15, 19, 20 und 21 abgeführt wird. Da der Vorratsbehälter 18 einen Überlauf 41 aufweist, wird die zu viel zugeführte Prüfflüssigkeit 6 abgeführt. Der Pegel 22 bleibt konstant. Konstruktiv einfach ist dem Überlauf 41 ein Arbeitsbehälter 42 nachgeschaltet, der über eine Pumpe 43 mit dem Vorratsbehälter 18 verbunden ist, um damit einen Kreislauf für die Prüfflüssigkeit 6 zu schaffen.

Alternativ bzw. ergänzend zum Rückpumpen der verwendeten Prüfflüssigkeit 6 in den Arbeitsbehälter 42 kann diese auch durch einen Auslass 44 aus der Auffangwanne 37 abgelassen werden. Um ausreichende Menge an Prüfflüssigkeit 6 auch bei dieser Ausführungsvariante sicherzustellen kann der Zulauf von frischer Prüfflüssigkeit 6 durch den Zulauf 45 geregelt werden.

## Patentansprüche

1. Vorrichtung zur Korrosionsprüfung mindestens einer Probe (2, 3, 4, 5) mit Hilfe einer Prüfflüssigkeit (6) mit einer Halterung (16) zur Befestigung wenigstens einer zu prüfenden Probe (2, 3, 4, 5), mit einem Vorratsbehälter (18) für die Prüfflüssigkeit (6), mit einer mit dem Vorratsbehälter (18) verbundenen Flüssigkeitsleitung (12, 13, 14, 15, 19, 20, 21) und mit einer an die Flüssigkeitsleitung (12, 13, 14, 15, 19, 20, 21) anschließenden Tropfeinrichtung (8, 9, 10, 11) zur Abgabe von Tropfen (7) auf die Probe (2, 3, 4, 5), **dadurch gekennzeichnet, dass** mindestens zwei Flüssigkeitsleitungen (12, 13, 14, 15, 19, 20, 21) an den gemeinsamen Vorratsbehälter (18) getrennt voneinander angeschlossen sind und unterhalb des Pegels (22) der Prüfflüssigkeit (6) im Vorratsbehälter (18) an einem gemeinsamen horizontalen Träger (23) befestigt je einen Anschluss (24) für eine Tropfeinrichtung (8, 9, 10, 11) zur Korrosionsprüfung von mindestens zwei an der Halterung (16) befestigten Proben (2, 3, 4, 5) aufweisen.

2. Vorrichtung nach Anspruch 1, **dadurch gekennzeichnet, dass** die Flüssigkeitsleitungen (12, 13, 14, 15, 19, 20, 21) in gleichen Längen vom Träger (23) abstehend in je einen Anschluss (24) für eine Tropfeinrichtung (8, 9, 10, 11) enden.

3. Vorrichtung nach Anspruch 1 oder 2, **dadurch gekennzeichnet, dass** die Tropfeinrichtungen (8, 9, 10, 11) je eine Injektionsnadel (25, 26) aufweisen, die an den jeweiligen Anschluss (24) der Flüssigkeitsleitungen (12, 13, 14, 15, 19, 20, 21) anschließt.

4. Vorrichtung nach Anspruch 1, 2 oder 3, **dadurch gekennzeichnet, dass** die Vorrichtung ein Gehäuse (17) und eine mit dem Gehäuse (17) verbundene Linearführung (27) aufweist, die zwischen Träger (23) und Gehäuse (17) vorgesehen ist.

5. Vorrichtung nach einem der Ansprüche 1 bis 4, **dadurch gekennzeichnet, dass** die Halterung (16) eine Haltefläche (31) für alle Proben (2, 3, 4, 5) aufweist.

6. Vorrichtung nach Anspruch 5, **dadurch gekennzeichnet, dass** eine Platte (30) der Halterung (16) die Haltefläche (31) ausbildet.

7. Vorrichtung nach Anspruch 5 oder 6, **dadurch gekennzeichnet, dass** die Halterung (16) zumindest bereichsweise im Bereich seiner Haltefläche (31) permanentmagnetisch zur Fixierung der metallischen Proben (2, 3, 4, 5) ausgebildet ist.

8. Vorrichtung nach Anspruch 5, 6 oder 7, **dadurch gekennzeichnet, dass** die Halterung (16) eine Schwenkeinrichtung (32) aufweist, die die Haltefläche (31) schwenkbar gegenüber der Tropfeinrichtung (8, 9, 10, 11) lagert.

9. Vorrichtung nach Anspruch 8, **dadurch gekennzeichnet, dass** die Vorrichtung ein Gehäuse (17) aufweist, und dass die Schwenkeinrichtung (32) über eine insbesondere senkrecht verlaufende Linearführung (33) am Gehäuse (17) verschiebbar gelagert ist.

10. Vorrichtung nach einem der Ansprüche 1 bis 9, **dadurch gekennzeichnet, dass** der Vorratsbehälter (18) mit einer Prüfflüssigkeit (6) führenden Zuleitung (40) verbunden ist und einen Überlauf (41) für einen konstanten Pegel (22) an Prüfflüssigkeit (6) im Vorratsbehälter (18) aufweist.

11. Vorrichtung nach Anspruch 10, **dadurch gekennzeichnet, dass** die Vorrichtung einen Arbeitsbehälter (42) aufweist, mit der der Überlauf (41) und die Zuleitung (40) verbunden sind.

12. Vorrichtung nach einem der Ansprüche 1 bis 11, **dadurch gekennzeichnet, dass** die Vorrichtung (1) eine unterhalb der Proben (2, 3, 4, 5) vorgesehene Auffangwanne (37) für die Prüfflüssigkeit (6) aufweist.

13. Vorrichtung nach Anspruch 12, **dadurch gekennzeichnet, dass** die Auffangwanne (37) über eine Pumpleitung (38) der Vorrichtung (1) mit dem Vorratsbehälter (18) verbunden ist.

14. Verfahren zur Korrosionsprüfung mindestens einer Probe (2, 3, 4, 5) mit Hilfe einer Prüfflüssigkeit (6), bei der die durch mindestens eine Injektionsnadel (25, 26) einer Tropfeinrichtung (8, 9, 10, 11) geleitete Prüfflüssigkeit (6) auf die Probe (2, 3, 4, 5) aufgetropft wird, **dadurch gekennzeichnet, dass** mehrere Proben (2, 3, 4, 5) mit je einer Injektionsnadel (25, 26) parallel mit Prüfflüssigkeit (6) betropft werden, wobei über die Höhe des Pegels (22) der Prüfflüssigkeit (6) eines Vorratsbehälters (18), mit dem die Injektionsnadeln (25, 26) verbunden sind der hydrostatische Druck der Prüfflüssigkeit (6) an den Injektionsnadeln (25, 26) gleich eingestellt wird.

## Claims

1. An apparatus for corrosion testing at least one sample (2, 3, 4, 5) by means of a test liquid (6), comprising a retainer (16) for fastening at least one sample (2, 3, 4, 5) to be tested, a storage container (18) for the test liquid (6), a liquid line (12, 13, 14, 15, 19, 20, 21) connected to the storage container (18), and a dripping device (8, 9, 10, 11) connected to the liquid line (12, 13, 14, 15, 19, 20, 21) for emitting drops (7) to the sample (2, 3, 4, 5), **characterized in that** at least two liquid lines (12, 13, 14, 15, 19, 20, 21) are separately connected to the common storage container (18) and comprise, beneath the level (22) of the test liquid (6) in the storage container (18) and connected to a common horizontal support (23), a respective connection (24) for a dripping device (8, 9, 10, 11) for corrosion testing of at least two samples (2, 3, 4, 5) fastened to the retainer (16).

2. An apparatus according to claim 1, **characterized in that** the liquid lines (12, 13, 14, 15, 19, 20, 21), protruding in equal lengths from the support (23), end in a respective connection (24) for a dripping device (8, 9, 10, 11).

3. An apparatus according to claim 1 or 2, **characterized in that** the dripping devices (8, 9, 10, 11) each comprise one injection needle (25, 26) which is connected to the respective connection (24) of the liquid lines (12, 13, 14, 15, 19, 20, 21).

4. An apparatus according to claim 1, 2 or 3, **characterized in that** the apparatus comprises a housing (17) and a linear guide (27) connected to the housing (17), said linear guide being provided between the support (23) and the housing (17).

5. An apparatus according to one of the claims 1 to 4, **characterized in that** the retainer (16) comprises a holding surface (31) for all samples (2, 3, 4, 5).

6. An apparatus according to claim 5, **characterized in that** a plate (30) of the retainer (16) forms the holding surface (31).

7. An apparatus according to claim 5 or 6, **characterized in that** the retainer (16) is formed in a permanent magnetic manner for fixing the metallic samples (2, 3, 4, 5) at least in sections in the region of the holding surface (31) thereof.

8. An apparatus according to claim 5, 6 or 7, **characterized in that** the retainer (16) comprises a pivoting device (32) which pivotably mounts the holding surface (31) in relation to the dripping device (8, 9, 10, 11).

9. An apparatus according to claim 8, **characterized in that** the apparatus comprises a housing (17), and the pivoting device (32) is displaceably mounted on the housing (17) via an especially perpendicularly extending linear guide (33).

10. An apparatus according to one of the claims 1 to 9, **characterized in that** the storage container (18) is connected to a feed line (40) conducting test liquid (6) and comprises an overflow (41) for a constant level (22) of test liquid (6) in the storage container (18).

11. An apparatus according to claim 10, **characterized in that** the apparatus comprises a working container (42) to which the overflow (41) and the feed line (40) are connected.

12. An apparatus according to one of the claims 1 to 11, **characterized in that** the apparatus (1) comprises a collecting trough (37) provided beneath the samples (2, 3, 4, 5) for the test liquid (6).

13. An apparatus according to claim 12, **characterized in that** the collecting trough (37) is connected via a pump line (38) of the apparatus (1) to the storage container (18).

14. A method for corrosion testing at least one sample (2, 3, 4, 5) by means of a test liquid (6), wherein the test liquid (6) conducted through at least one injection needle (25, 26) of a dripping device (8, 9, 10, 11) is dripped onto the sample (2, 3, 4, 5), **characterized in that** several samples (2, 3, 4, 5) are dripped with one respective injection needle (25, 26) in parallel with test liquid (6), wherein the hydrostatic pressure of the test liquid (6) at the injection needles (25, 26) is set equally via the height of the level (22) of the test liquid (6) of a storage container (18) to which the injection needles (25, 26) are connected.

## Revendications

1. Dispositif pour un essai de corrosion sur au moins une éprouvette (2, 3, 4, 5) à l'aide d'un liquide d'essai (6), avec une monture (16) pour fixer au moins une éprouvette (2, 3, 4, 5) à tester, avec un réservoir (18) pour le liquide d'essai (6), avec une conduite de liquide (12, 13, 14, 15, 19, 20, 21) reliée au réservoir (18) et avec un dispositif de goutte-à-goutte (8, 9, 10, 11) raccordé à la conduite de liquide (12, 13, 14, 15, 19, 20, 21) pour déposer des gouttes (7) sur l'éprouvette (2, 3, 4, 5), **caractérisé en ce qu'**au moins deux conduites de liquide (12, 13, 14, 15, 19, 20, 21) sont raccordées au réservoir (18) commun séparément l'une de l'autre et présentent chacune, fixé à un support horizontal commun (23) en dessous du niveau (22) du liquide d'essai (6) dans le réservoir (18), un raccord (24) pour un dispositif de goutte-à-goutte (8, 9, 10, 11) pour l'essai de corrosion d'au moins deux éprouvettes (2, 3, 4, 5) fixées à la monture (16).

2. Dispositif selon la revendication 1, **caractérisé en ce que** les conduites de liquide (12, 13, 14, 15, 19, 20, 21) dépassent de la même longueur du support (23) et se terminent chacune par un raccord (24) pour un dispositif de goutte-à-goutte (8, 9, 10, 11).

3. Dispositif selon la revendication 1 ou 2, **caractérisé en ce que** les dispositifs de goutte-à-goutte (8, 9, 10, 11) comportent chacun une aiguille d'injection (25, 26) qui se raccorde au raccord (24) correspondant des conduites de liquide (12, 13, 14, 15, 19, 20, 21).

4. Dispositif selon la revendication 1, 2 ou 3, **caractérisé en ce que** le dispositif comporte un boîtier (17) et un guide linéaire (27) relié au boîtier (17), qui est prévu entre le support (23) et le boîtier (17).

5. Dispositif selon l'une des revendications 1 à 4, **caractérisé en ce que** la monture (16) comporte une surface de maintien (31) pour toutes les éprouvettes (2, 3,4, 5).

6. Dispositif selon la revendication 5, **caractérisé en ce qu'**un plateau (30) de la monture (16) forme la surface de maintien (31).

7. Dispositif selon la revendication 5 ou 6, **caractérisé en ce que** la monture (16) est dotée d'un magnétisme permanent au moins par zones au niveau de sa surface de maintien (31) afin de fixer les éprouvettes (2, 3, 4, 5) métalliques.

8. Dispositif selon la revendication 5, 6 ou 7, **caractérisé en ce que** la monture (16) présente un dispositif pivotant (32) qui supporte la surface de maintien (31) avec la possibilité de pivoter par rapport au dispositif de goutte-à-goutte (8, 9, 10, 11).

9. Dispositif selon la revendication 8, **caractérisé en ce qu'**il comporte un boîtier (17) et **en ce que** le dispositif pivotant (32) est supporté avec possibilité de translation sur le boîtier (17) sur un guide linéaire (33), en particulier vertical.

10. Dispositif selon l'une des revendications 1 à 9, **caractérisé en ce que** le réservoir (18) est relié à une conduite d'alimentation (40) acheminant du liquide d'essai (6) et comporte un trop-plein (41) pour maintenir un niveau (22) de liquide d'essai (6) constant dans le réservoir (18).

11. Dispositif selon la revendication 10, **caractérisé en ce que** le dispositif comporte une cuve de travail (42) qui est reliée au trop-plein (41) et à la conduite d'alimentation (40).

12. Dispositif selon l'une des revendications 1 à 11, **caractérisé en ce que** le dispositif (1) comporte un bac de récupération (37) pour le liquide d'essai (6) prévu en dessous des éprouvettes (2, 3, 4, 5).

13. Dispositif selon la revendication 12, **caractérisé en ce que** le bac de récupération (37) est relié au réservoir (18) par une conduite de pompage (38) du dispositif (1).

14. Méthode pour l'essai de corrosion d'au moins une éprouvette (2, 3, 4, 5) à l'aide d'un liquide d'essai (6), dans laquelle le liquide d'essai (6) acheminé par au moins une aiguille d'injection (25, 26) d'un dispositif de goutte-à-goutte (8, 9, 10, 11) est déposé goutte à goutte sur l'éprouvette (2, 3, 4, 5), **caractérisée en ce que** plusieurs éprouvettes (2, 3, 4, 5) sont mouillées en parallèle avec le liquide d'essai (6) par une aiguille d'injection (25, 26) chacune, la hauteur du niveau (22) du liquide d'essai (6) d'un réservoir (18) avec lequel les aiguilles d'injection (25, 26) sont reliées permettant de régler à la même valeur la pression hydrostatique du liquide d'essai (6) au niveau des aiguilles d'injection (25, 26).
